# EUROPEAN PATENT APPLICATION

(11) **EP 2 487 614 A1**
(43) Date of publication of application: **15.08.2012**
(21) Application number: 11154244.5
(22) Date of filing: 11.02.2011
(51) Int. Cl.: G06F 17/50

(54) **Adding fine grain tuning circuitry to integrated circuit design**

(71) Applicant: IMEC, 3001 Leuven (BE); VRIJE UNIVERSITEIT BRUSSEL, 1050 Brussel (BE)
(72) Inventor: AbdelHamid, Ahmed, 21411, Sidi Basher Bahari, Alexandria (EG)
(74) Representative: Bird, Ariane

(57) **Abstract**

A design for an integrated circuit is amended by providing a design elaborated to have representations of generic logic components (520) and interconnections between the generic logic components, automatically selecting (210) those of the generic logic components which are in critical timing paths, and amending the design to add (220) the fine grain tuning circuitry (500, MA, KA) automatically to the selected generic logic components in the elaborated design for use in maintaining the critical timing paths during operation of the integrated circuit. By adding the circuitry at this lower level of design while it is still generic, before the synthesis stage, the additions can be made more quickly and with less disruption to the design process.

## Description

**Technical Field**: This invention relates to methods of amending designs for integrated circuits, to corresponding computer programs, to methods of manufacturing such integrated circuits and to corresponding systems for designing integrated circuits.

### Background

Thanks to technology scaling it has been possible to increase performance and reduce the energy consumption and the manufacturing costs in integrated circuits. Now, with scaling beyond 45 nm the unpredictability of electrical properties of devices is stopping this trend.

Technology scaling past the 65nm technology node, introduces a lot more unpredictability in the timing and energy consumption of the designs due to random Within-Die (WID) variations (hereafter called process variability). Treating these metrics at the system-on-chip (SoC) integration level as deterministic values via corner points requires the design margins to become so large that they can eat up all the benefits of moving to a more advanced technology node. Moreover the amount of corner points needed per process variability source increases dramatically every technology node leading to new statistical design paradigms.

Most of the existing work is focused at the gate level of abstraction with SSTA (Statistical Static Timing Analysis) as a method to analyze the timing of the circuits. Only very recently, statistical timing analysis has been combined with power optimization techniques to decide on the allocation of high or low threshold voltage gates hence co-optimizing timing and leakage power consumption. Energy and/or performance vs. cost trade-off decisions are an issue for embedded system on chip (SoC) design and the most critical trade-offs cannot be made at the gate level but at the higher IP-block or architecture level. Therefore some analysis techniques for timing and energy yield aware design are emerging to tackle the problem. However, these techniques often focus on memory organizations and are not generic enough to be applied to the full SoC context. These rely on the assumption that energy and timing are uncorrelated metrics and require percolating disjoint Gaussian statistical distributions for the statistics of the underlying SoC components.

A different approach is described in:
"A Standardized Knobs and Monitors RTL2RTL Insertion Methodology for Fine Grain SoC Tuning," by AbdelHamid, A.; Anchlia, A.; Mamagkakis, S.; Miranda, M.C.; Dierickx, B.; Kuijk, M.; Digital System Design, Architectures, Methods and Tools, 2009. DSD '09. 12th Euromicro Conference on , vol., no., pp.401-408, 27-29 Aug. 2009, hereinafter "ref 1"

This is referred to as RTL2RTL version 1 and involves manual insertion of Standardized Knobs and Monitors (SKM) on RTL behavioural description, which enables monitoring and adjusting the circuits at run-time by utilizing power-delay trade-offs. Systematic insertion of digital monitors is done at the RTL behavioural level of design abstraction, e.g. inserting modified crystal ball delay monitor in a real-life wireless application.

But this includes many limitations e.g. manual inspection of behavioural code, and in some cases changes in the critical path, to make insertion points visible, then reviewing behavioural code to identify where in the code to insert monitors, uses DFT, which means verification must be carried out after synthesis. Hence it is time consuming and thus not easily scalable to cases where hundreds of such monitors are to be added.

### Summary of the Invention:

An object of the invention is to provide improved apparatus or methods. According to a first aspect, the invention provides:
a method of amending a design for an integrated circuit to add fine grain tuning circuitry, the method having the steps of: providing a design elaborated to have representations of generic logic components and interconnections between the generic logic components, automatically selecting those of the generic logic components which are in critical timing paths, and amending the design before synthesis to add the fine grain tuning circuitry automatically to the selected generic logic components in the elaborated design for use in maintaining the critical timing paths during operation of the integrated circuit.

By adding the circuitry at this lower level of design while it is still generic, before the synthesis stage, the additions can be made more quickly and with little or no disruption to the design process.

Embodiments of the invention can have any other features added, some such additional features are set out in dependent claims and described in more detail below, and these or other features may be disclaimed from any aspect of the invention.

Other aspects of the invention include corresponding systems, and corresponding computer programs. Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
   Fig. 1 shows a sequence of steps according to a known method,
   Fig. 2 shows a sequence of steps according to a first embodiment,
   Figs. 3 to 5 show sequences of steps according to other embodiments,
   Fig. 6 shows a system view of another embodiment,
   Fig. 7 shows a schematic view of a design with fine grain circuitry added, including the option of a port to interface the fine grain circuitry off-chip to be visible to the operating system through memory mapped I/O for example,
   Fig. 8 shows an example of a design after synthesis,
   Fig. 9 shows an example of fine grain circuitry for monitoring, for use in embodiments,
   Fig. 10 shows an example of fine grain circuitry for tuning for use in embodiments, and
   Fig. 11 shows a crystal ball delay monitor modified architecture. The modified architecture is obtained by applying architectural changes suggested in Figure 9 to the monitor architecture.

Detailed Description:
The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention. References to a signal can encompass any kind of signal in any medium, and so can encompass an electrical or optical or wireless signal or other signal for example. References to fine grain circuitry are intended to encompass circuitry which is distributed amongst the logic of the design, as opposed to coarse grain circuitry which tests only one or two key outputs or interfaces between major parts of the logic. References to generic logic components are intended to encompass any components such as logic gates such as AND gates, OR gates, latches and so on, which are not specific to any particular integrated circuit technology. This is intended to encompass various levels of generic logic components, such as a memory component that represents all types of latches and flip flops, or a less generic level where different types of latches and flip flops are shown. Any type of logic components can be used, provided wiring connections are represented. This enables the locations of additional circuitry to be specified easily without modifying the original design, which may not be possible when the design is at the earlier stage of being specified in software terms with software loops and so on.

References to synthesis are intended to encompass any way of converting an elaborated design having representations of logic which are not specific to any particular integrated circuit technology, into a design which is specific to a particular integrated circuit technology, with for example logic gates having specified delays or power consumption values.

References to a processor can encompass any means for processing signals or data in any form and so can encompass for example a personal computer, a microprocessor, analog circuitry, application specific integrated circuits, software for the same, and so on.

In the description provided herein, numerous specific details are set forth. However, it is understood that embodiments of the invention may be practiced without these specific details. In other instances, well-known methods, structures and techniques have not been shown in detail in order not to obscure an understanding of this description.

### Introduction to some issues addressed by some of the embodiments

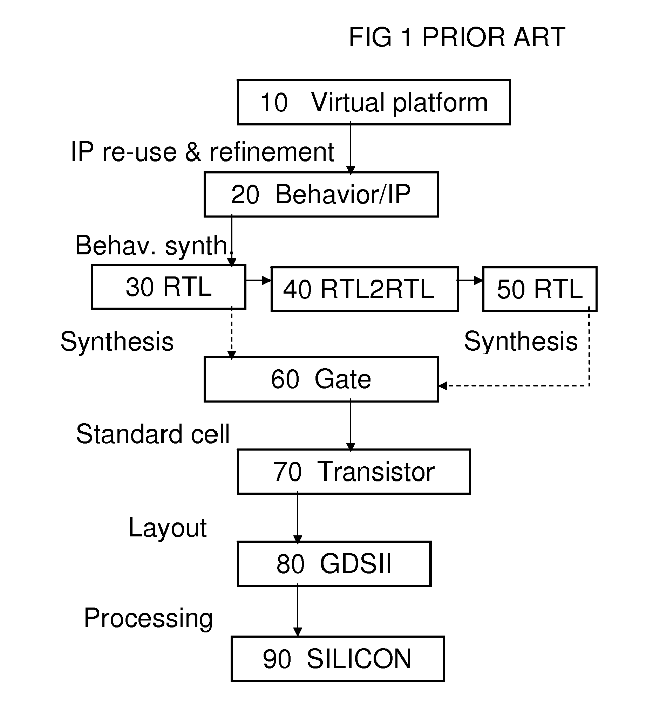

By way of introduction to the embodiments, some problems of the RTL2RTL approach will be discussed with reference to figure 1. This figure shows a sequence of steps and intermediate stages from design to manufacture of the integrated circuit. A starting point is stage 10 which is a virtual platform for carrying out initial design having reusable components. A designer carries out IP reuse and refinement of the design to create a representation 20 of the design in terms of its behaviour and use of reusable IP.

A behavioural synthesis step is carried out next to produce an RTL representation 30 of the design. This is still in behavioural terms. An example of such behavioural is a piece of code as follows:
Code 1: Registered output is function of its self as input:
   Architecture
   --Combinational logic section
   Process(clk, rst)
   Begin
      If (reset conditions) X <= "0"
      Else (conditions(clk,rst,others)) X <= X +1
      End if
      End process

At this stage, fine grain circuitry is added to the critical timing paths. This assumes that the critical timing paths have been assessed. This can be carried out by known synthesis tools (Design Compiler for Synopsys, etc...). More detailed assessment of statistically critical timing paths can be carried out by a tool such as a variability aware modelling VAM framework.

For these selected paths and/or components, a set of 'monitors' and 'knobs' are added to give fine grain tuning of these paths/components. The Standardized Knobs and Monitors framework (SKM) uses input from VAM to tune circuits at test-time or run-time for variability or reliability issues respectively. The fine grained tuning Technology Aware Design (TAD from now on) technique is used to shift the variability clouds when needed, consequently, producing gains in power consumption or gains in performance, as discussed in ref 1.

Components of SKM enabled design are: (1) Input host chip of SKM circuits. (2) Description of standard knobs and/or monitors (3) an on-chip controller with registers visible to system level middleware (4) a software control algorithm as illustrated in [6] (5) an interconnect communication scheme between basic components.

This can enable SKM circuits to be introduced at the RTL stage and before synthesis, over introducing them after synthesis as has been proposed at gate level netlist or post layout. RTL2RTL can be defined as a three stage process that incorporates insertion of SKM hardware prior to synthesis. Firstly, topology of knobs and circuits is chosen. Secondly, fine grain insertion takes place. And finally, data routing is performed. RTL2RTL in its very basic definition is a step that lies between behavioral synthesis and synthesis as shown in Figure 1. The synthesis step is well known and produces a gate level design 60. Subsequent steps are also conventional, including a standard cell procedure to convert the gate level design to a transistor level design 70. A layout step produces multiple layer patterns GDSII 80, which can then be used in multiple processing steps on a silicon wafer 90.

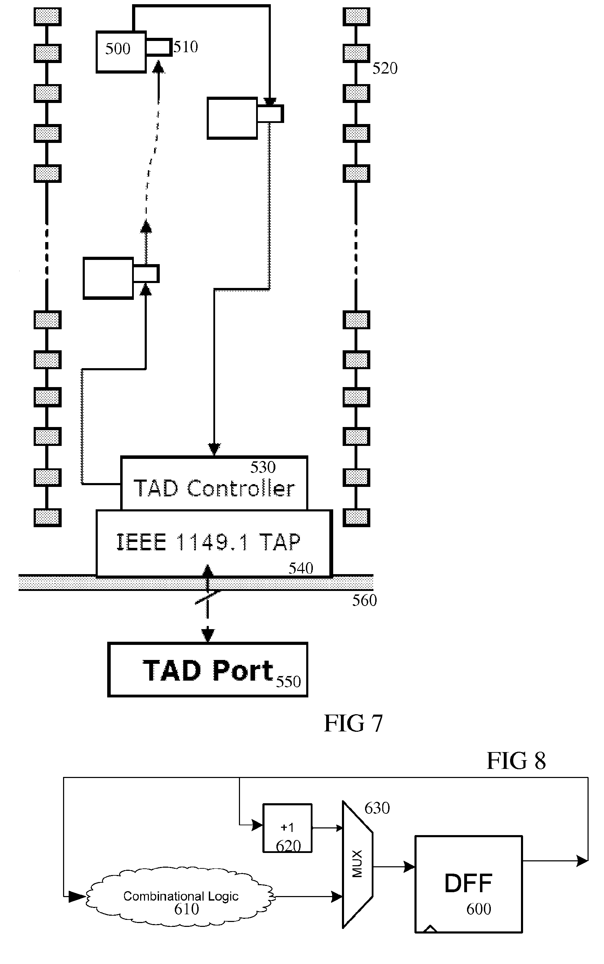

In RTL2RTL v1.0 digital monitors had to be inserted manually. The insertion of one monitor and propagating its interface signals in the design was found to consume on the average 30 minutes. Also the intervention has to continue to change interfaces of the design units, testbenches and finally DFT flow. The manual insertion is needed for example because in some cases the insertion points are not explicit in the behavioural level RTL code. Figure 8 shows an example of such a case a conditional registered output with a feedback input to one or more input states based on code 1 as set out above.

RTL2RTL v1.0 was always dependent on identifying the left hand signal (LHS) and the right hand signal (RHS) clearly. That's to say in a VHDL code inside a "process": LHS <= RHS. Where the LHS was identified as the output signal of a flipflop (DFF 600) and the RHS was identified as the input signal of the DFF, both were attached to the digital timing monitor input. In the code listed in Code 1 the output is a registered function of its self as input. The input signal to the DFF appears only after synthesis at gate level as shown in Figure 8. This shows a combinational logic section 610. An adder 620 is provided to add 1 to the DFF output. A multiplexer 630 is provided to couple either the output of the adder or the output of the combinational logic to the input of the DFF. Attempts to extract the function (X+1) from the process and to move it to the combinational logic section will eventually change the critical path. The best case scenario in such a situation is to be able to redesign all the combinational logic generated by conditions to be outside the process. Consequently, RHS and LHS will be visibly distinctive. Given the fact that the input to the DFF must be captured by the Delay-Monitor "as is" and NOT after being synchronized by some other intermediate FF, designers will not accept changing their design's critical path in this way. Moreover, automating such a process becomes an impossible software task.

### Introduction to features of the embodiments

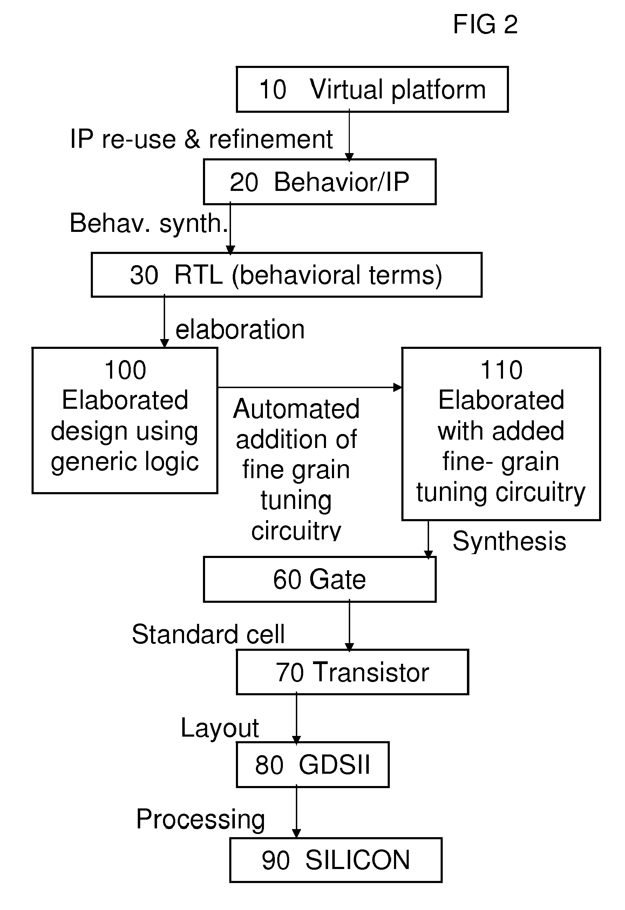

In order to allow deployment of hundreds of fine grain digital knobs and monitors efficiently, a lower abstraction level of the design is proposed for the insertion. An abstraction level has been found that lies just before synthesis, to enable the benefits of RTL SKM fine grained insertion, involving amending the design to add the fine grain tuning circuitry automatically to the identified generic logic components in the elaborated design. Figure 2 shows an embodiment similar to that of figure 1, except that stages 40 and 50 are replaced by stages 100 and 110. From stage 30 the RTL behavioural file is elaborated into design of generic logic components. There is a step of automated addition of the fine grain tuning circuitry, to create the elaborated design 110. This can then be synthesised as before.

Compared to manual inspection of higher level behavioural code, it can be quicker and less disruptive to the design process to make the identification and addition at the generic logic level because suitable connection points are explicitly represented and so no change need be made to the behavioural code to make such points explicit. Also this makes it feasible to automate the steps, thus making it more scalable to fine grain circuitry which could be too time consuming to add manually to many different parts of the design. In some cases it can be less invasive in the sense that no changes to internal interfaces of the design are needed. Since it is carried out at the generic (technology independent) level, verification is quicker than if changes and verification are done post synthesis.

In some embodiments there is the step of automatically amending the design to add connections to the fine grain tuning circuitry. This contributes further to the beneficial effects set out above.

The added connections can comprise a connection to an interface accessible by a processor of the design. This can give system level access to device level maintenance functions such as those relating to variability and reliability.

In some cases there is a step of appending fine grain tuning circuitry constraints to design constraints before synthesis. This makes the constraints consistent with the amended design to reduce errors introduced by amending designs after synthesis.

The amended design can be in the form of a register transfer level net list. This is a useful and commonly used format.

The step of automatically identifying the generic logic components can comprise parsing the register transfer level netlist to select these components.

In some cases the method can have a preliminary step of converting a behavioural description of the design into the elaborated design having representations of generic logic components and interconnections between the generic logic components.

In some cases there is a preliminary step of identifying the critical timing paths in the design.

The method can in some cases have the step of subsequently synthesising the amended design into a technology mapped design.

The method can be part of a method of manufacturing the integrated circuit according to the technology mapped design by using generic cells to generate a gate level specification, and by carrying out a layout process to generate a transistor level specification from the gate level specification, and by processing a wafer according to the transistor level specification. Such integrated circuit manufacturing can have increased yield because more chips with worse performance can be tuned to work longer or made with reduced margins or tolerances.

The fine grain tuning circuits can comprise a delay monitoring circuit for monitoring the delays of signals during operation of a part of a critical timing path.

The fine grain tuning circuitry can comprise circuitry for adjusting delays of signals during operation of a part of a critical timing path.

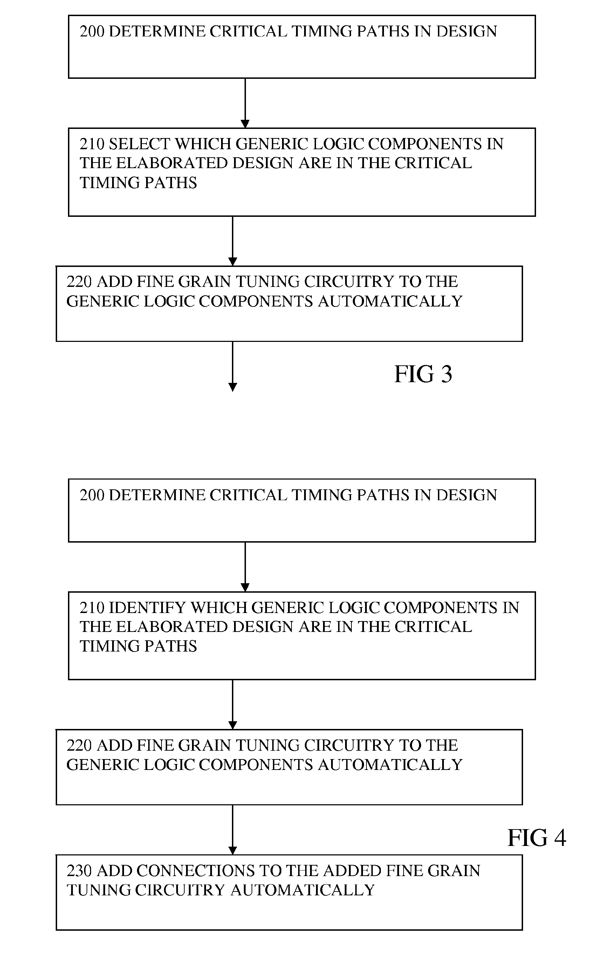

### Figs 3-5, further embodiments of the invention

Figure 3 shows method steps according to an embodiment. At step 200, critical timing parameters in the design are determined. This can be carried out in various ways. At step 210, there is a step of selecting which of the generic logic components are in the critical timing paths. At step 220 the fine grain tuning circuitry is added automatically to the selected generic logic components. Each of these steps can be implemented in various ways. Other steps can be added.

Figure 4 shows a similar embodiment, in this case there is a further step 230 of adding connections automatically to the added fine grain circuitry.

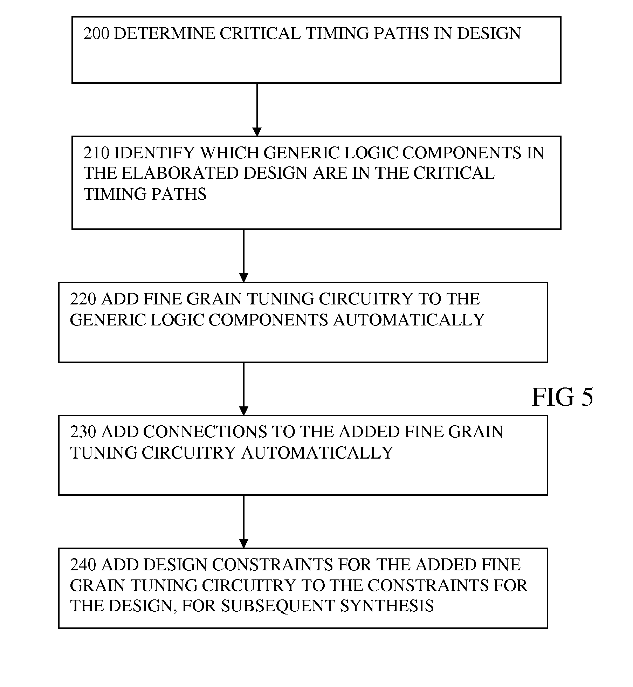

Figure 5 shows a similar embodiment, in this case there is a further step 240 of adding design constraints for the added fine grain tuning circuitry to the existing constraints for the design, for subsequent synthesis.

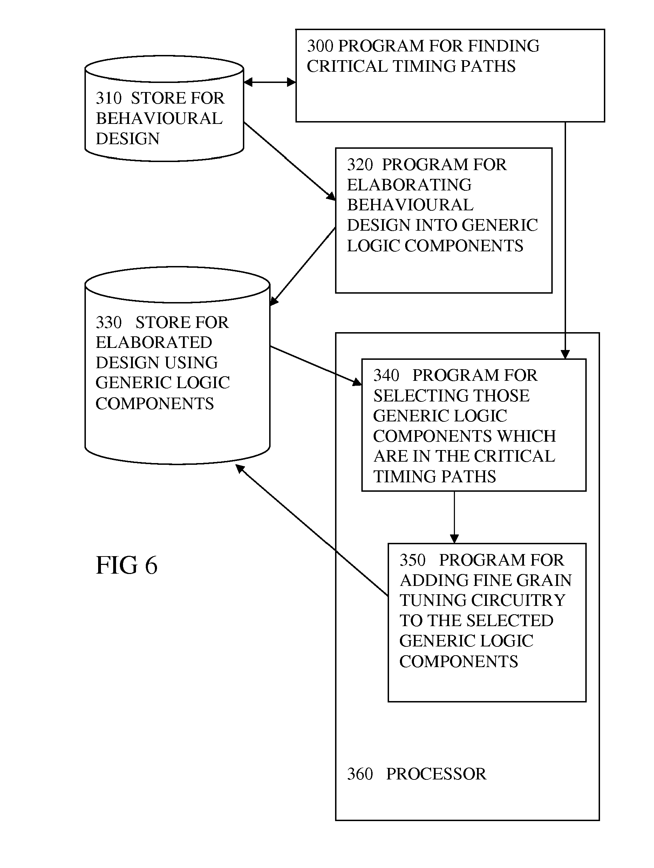

### Figure 6, system according to an embodiment.

Figure 6 shows a schematic view of a system according to an embodiment. In this figure a program 300 is provided for finding critical timing paths in a stored representation 310 of a behavioural design for an integrated circuit. A program 320 is provided tor elaborating the behavioural design into an elaborated design 330 having generic logic components, stored for use by other programs. A program 340 is provided for selecting those generic components in the elaborated design which are in the critical timing paths. A program 350 is provided for adding automatically the fine grain tuning circuitry to the selected generic logic components. The various programs can be integrated together as desired. At least programs 340 and 350 are run by a processor 360. Subsequent processing steps can be carried out by this processor or by others.

### Figure 7, elaborated design with added fine grain circuitry

Figure 7 shows a view of an elaborated design with the added fine grain circuitry. The generic logic components 520 are shown without providing detail. Tuning circuitry 500 is added to monitor or tune selected ones of the generic logic components. Additional circuitry 510 is provided for interconnection between the parts of the fine grain circuitry. Such interconnection can be in the form of scan circuitry following similar principles to the scan circuitry used conventionally for chip testing during manufacture. This can enable control or monitoring signals relating to the fine grain circuitry to be multiplexed and if needed interfaces to other parts on or off chip. In this case, a TAD controller 530 is provided and an IEEE 1149.1 TAP 540, to pass signals off the edge 560 of the chip to a TAD port 550.

The elaborated design can have any kind of generic logic components, provided the interconnections equivalent to wiring interconnections are represented explicitly, so that the insertion points can be identified without needing to infer them from functional software-like features such as repeating loops.

An example of an elaborated design in the form of generic code having generic logic components and interconnections is set out below.
1. Generic Code Sample: A-Cell Design elaborated. (From VHDL-Behavioral to VHDL-Generic)
   GTECH == Generic Technology Component
   SYNOPSYS_BASIC_SEQUENTIAL_ELEMENT == Sample Generic FlipFlop/Latch
2. library IEEE;
3. use IEEE.std_logic_1164.all;
4. entity dms_84 is
5. port( clk, tad_clk, tad_sync_reset_n, tad_mode_sel, monitor_si, monitor_d_i,
6. monitor_q_i : in std_logic; monitor_so : out std_logic);
7. end dms_84;
8.
9. architecture SYN_dm_beh_arch of dms_84 is
10. component GTECH_NOT
11. port( A : in std_logic; Z : out std_logic);
12. end component;
13.
14. component GTECH_BUF
15. port( A : in std_logic; Z : out std_logic);
16. end component;
17.
18. component SYNOPSYS_BASIC_SEQUENTIAL_ELEMENT
19. generic ( ac_as_q, ac_as_qn, sc_ss_q : integer);
20. port(
21. clear, preset, enable, data_in, synch_clear, synch_preset,
22. synch_toggle, synch_enable, next_state, clocked_on : in std_logic;
23. Q, QN : buffer std_logic
24. );
25. end component;
26.
27. component GTECH_XOR2
28. port( A, B : in std_logic; Z : out std_logic);
29. end component;
30.
31. signal N0, N1, N2, X_Logic1_port, X_Logic0_port, clk_port, tad_clk_port,
32. monitor_si_port, monitor_so_port, monitor_d_s, tad_q_s, monitor_s, N3, N4
33. , N5, monitor_mux_so, N6, N7, net11116, net11117, net11118 : std_logic;
34.
35. begin
36. clk_port <= clk;
37. tad_clk_port <= tad_clk;
38. monitor_si_port <= monitor_si;
39. monitor_so <= monitor_so_port;
40.
41. dm_buf : GTECH_BUF port map( A => monitor_d_i, Z => monitor_d_s);
42. tad_q_s reg : SYNOPSYS_BASIC_SEQUENTIAL_ELEMENT
43. generic map ( ac_as_q => 1, ac_as_qn => 2, sc_ss_q => 5 )
44. port map ( clear => N6, preset => X_Logic0_port, enable =>
45. X_Logic0_port, data_in => X_Logic0_port, synch_clear =>
46. X_Logic0_port, synch_preset => X_Logic0_port, synch toggle =>
47. X_Logic0_port, synch_enable => X Logic1_port, next_state =>
48. monitor_d_s, clocked_on => clk_port, Q => tad_q_s, QN =>
49. net11118);
50. C16 : GTECH_XOR2 port map( A => tad_q_s, B => monitor_q_i, Z => N3);
51. monitor_s reg : SYNOPSYS_BASIC_SEQUENTIAL_ELEMENT
52. generic map ( ac_as_q => 1, ac_as_qn => 2, sc_ss_q => 5 )
53. port map ( clear => N6, preset => X_Logic0_port, enable =>
54. X_Logic0_port, data_in => X_Logic0_port, synch_clear =>
55. X_Logic0_port, synch_preset => X_Logic0_port, synch toggle =>
56. X_Logic0_port, synch_enable => N5, next_state => X Logic1_port,
57. clocked_on => clk_port, Q => monitor_s, QN => net11117);
58. monitor_so_reg : SYNOPSYS_BASIC_SEQUENTIAL_ELEMENT
59. generic map ( ac_as_q => 1, ac_as_qn => 2, sc_ss_q => 5 )
60. port map ( clear => N6, preset => X_Logic0_port, enable =>
61. X_Logic0_port, data_in => X_Logic0_port, synch_clear =>
62. X_Logic0_port, synch_preset => X_Logic0_port, synch toggle =>
63. X_Logic0_port, synch_enable => X Logic1_port, next_state =>
64. monitor_mux_so, clocked_on => tad_clk_port, Q => monitor_so_port
65. , QN => net11116);
66. I_0 : GTECH_NOT port map( A => tad_sync_reset_n, Z => N6);
67. I_1 : GTECH_NOT port map( A => tad_mode_sel, Z => N7);
68. C44 cell : SELECT_OP
69. generic map ( num_inputs => 2, input_width => 1 )
70. port map(
71. -- Connections to port'DATA1'
72. DATA(0) => X_Logic1_port,
73. -- Connections to port 'DATA2'
74. DATA(1) => X_Logic0_port,
75. -- Connections to port 'CONTROL1'
76. CONTROL(0) => N0,
77. -- Connections to port 'CONTROL2'
78. CONTROL(1) => N4,
79. -- Connections to port 'Z'
80. Z(0)=>N5);
81. B_0 : GTECH_BUF port map( A => N3, Z => N0);
82. C45_cell: SELECT_OP
83. generic map ( num_inputs => 2, input-Width => 1 )
84. port map(
85. -- Connections to port 'DATA1'
86. DATA(0) => monitor_si_port,
87. -- Connections to port 'DATA2'
88. DATA(1) => monitor_s,
89. -- Connections to port 'CONTROL1'
90. CONTROL(0) => N1,
91. -- Connections to port 'CONTROL2'
92. CONTROL(1) => N2,
93. -- Connections to port 'Z'
94. Z(0) => monitor_mux_so );
95. B_1 : GTECH_BUF port map( A => N7, Z => N1);
96. B_2 : GTECH_BUF port map( A => tad_mode_sel, Z => N2);
97. X Logic1_port <='1';
98. X_Logic0_port <='0';
99. I_2 : GTECH_NOT port map( A => N3, Z => N4);
100.
101. end SYN_dm_beh_arch;

The resulting chip from this code is in an ASIC chip already, as discussed in: Naessens, F.; Derudder, V.; Cappelle, H.; Hollevoet, L.; Raghavan, P.; Desmet, M.; AbdelHamid, A.; Vos, I.; Folens, L.; O'Loughlin, S.; Singirikonda, S.; Dupont, S.; Weijers, J.-W.; Dejonghe, A.; Van der Perre, L.; , "A 10.37 mm2 675 mW reconfigurable LDPC and Turbo encoder and decoder for 802.11n, 802.16e and 3GPP-LTE," VLSI Circuits (VLSIC), 2010 IEEE Symposium on , vol., no., pp.213-214, 16-18 June 2010

### Blade example

Blade is an example of an evolutionary RTL2RTL process that automatically inserts SKM circuits, provides flexible routing topologies, automatically connects SKM circuits, and sets their synthesis constraints. Notably this is done before synthesis. The Blade concept is illustrated for both a knob and a monitor circuit. More details are given on the implementation of a digital timing monitor.

Hundreds of digital circuits can be inserted automatically and data routed through them for instance by means of a scan chain like structure. Unlike RTL2RTL v1.0, where data routing was performed by means of DFT flow, In Blade, the insertion and data routing is performed totally at RTL netlist level. Blade methodology incorporates minimal possible interruption of the digital design flow. Running Blade can be as simple as sourcing *one* TCL script right after design elaboration. After running Blade, in the example shown in figure 7, a set of three circuits are inserted and are connected in a proper fashion: (1) a TAD controller, (2) an IEEE 1149.1 interface controller and (3) a set of fine-grained SKM digital circuits.

This provides one example of an implementation of monitor and/or knob circuits, a controller, and a connectivity architecture. Other examples can be envisaged. Both the IEEE interface controller and the TAD controller can have the same top level architecture and named controllers.

The TAD controller is mainly used to provide data management of the fine-grained circuits. In addition, the TAD controller allows control via system-level middleware software models by means of memory mapped I/O. The IEEE 1149.1 controller provides standard off-chip interface for runtime debugging.

The fine-grained circuits can be a mix of SKMs. Based on the input knob or monitor architecture the Blade steps shall be tuned. Although a "Digital Delay Monitor" will be described in more detail, other examples of tuning circuitry can be envisaged or added as well. Other extensions may include ―not limited to- the "Jitter Monitor", "Clock Stealing Knob" or any standard knob or monitor with a valid description preferably not synthesized in HDL. One major advantage of these techniques is it enables synthesizing the SKM circuits with the SoC design at the same time, which makes for a more efficient overall design procedure.

To summarise the procedure, after an initial RTL "read" operation by synthesis tools before they do their synthesis, as a preliminary, an input RTL is transformed to an RTL netlist. The transformation is forced anyways by an operation common known as "elaboration". The RTL netlist is an example of an elaborated design of generic logic components. It is effectively meta data, more like a structural VHDL design, that exhibits the same properties of RTL yet at a lower and more detailed generic abstraction level. In addition, the circuit components of an RTL netlist are absolutely technology independent. Moreover, the RTL netlist is perceived by the digital design tools to be a netlist. The RTL netlist therefore, includes the properties of a netlist and the properties of an RTL. Blade utilizes the RTL netlist as an input.

And since the operations performed on netlist by digital design tools are mainly in TCL, the Blade method utilizes a set of TCL scripts that perform automatically various operations of the method. In addition to the RTL netlist, the Blade TCL scripts use some extra inputs, mainly the modified SKM circuits. The SKM circuits must be encapsulated in a host Scan cell called in general A-Cell, MA-Cell for monitors and KA-Cell for knobs.

The Blade methodology can incorporate five distinctive steps running at RTL level as follows:
**1. Identification and preliminary work:** Identification is the process of identifying the SKM placement points in the SOC. The preliminary work can include architectural changes to the SKM circuits, and might incorporate preliminary synthesis iteration or running more dedicated flow using for example VAM/SSTA as mentioned above.
**2. Selection:** Selection is the process of parsing the RTL netlist for the input identified digital components by step 1. It creates a sort of an array of these elements. In addition, this step can include final standard directory and file structure setup.
**3. Insertion:** Insertion is the process of creating, adding and appropriately connecting various SKM circuits automatically to selected items mentioned in step 2
**4. Routing:** Routing is the process of setting up a communication infrastructure for SKMs placed in step 3. The communication infrastructure could be as simple as a scan chain, or as complex as a network on a chip NOC.
**5. Updating design constraints:** Updating design- constraints is the step of appending the SKM circuits design constraints to the whole SoC constraints. This step can include as well adding the IEEE 1149.1 or TAD interface to the SoC if not available.

In the following sections, some of these operations of Blade are set out in more detail by way of example. Variations can be envisaged. The digital delay monitor circuit common known as Crystal Ball monitor will be used as a pilot architecture to be modified and implemented using Blade.

A standard generic scan cell architecture i.e. the A-Cell will be used, though others are possible. The A-Cell is the basic standard unit of the Blade performance.

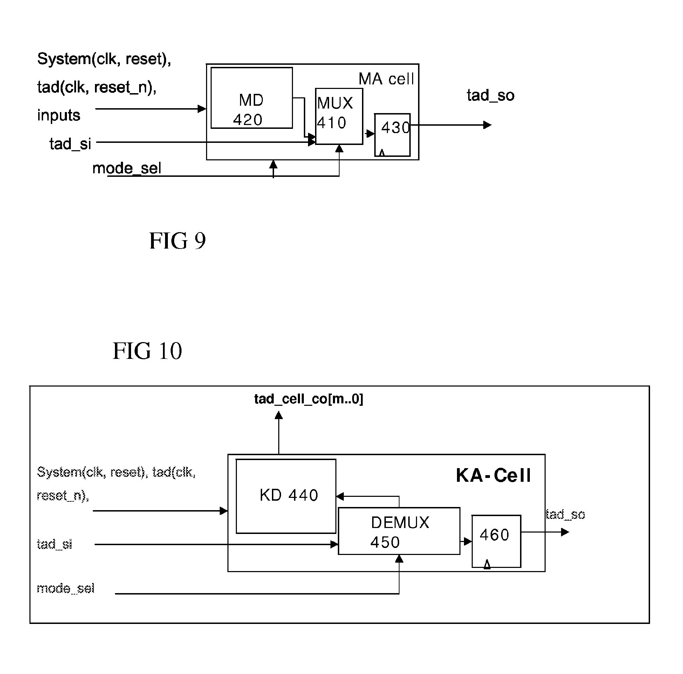

### Figure 9: Standard MA-Cell basic architecture

The MA-Cell, is a monitor incubator cell where the monitor is described preferably at RTL level. The monitor output is fed internally to a data routing architecture, usually a multiplexer with a memory component i.e. DFF. The MA-Cell is used to (1) "Capture" runtime technology feature metrics by means of standard monitors ex. NBTI or delay timing monitors. (2) "Scan" data from previous A-Cells via the dedicated scan-in scan-out architecture.

A generic MA-Cell as shown in Figure 9, for input requires (1) the original system clock and reset, (2) data input to be processed and monitored, (3) data input from a previous or another stage tad_si, () and a mode select input(s). The output is simply a scan out data pin. The MA-Cell includes mainly monitor description and communication architecture. The monitor description "MD" 420 in figure 9 could be either RTL description in HDL or a black box interface. The communication architecture used here is standard scan-chain architecture. There is a MUX 410 for selecting either the local output or the output of the previous part of the scan chain. This and the memory element 430 i.e. DFF are the main & only components of the scan-chain. Both are represented at RTL level in HDL.

The MA-Cell architecture provided here supports continuous capture and scan. Therefore, it is subject to architectural enhancements based on the required Scan-Capture scenario. Further enhancements include (1) Shut down for minimal power usage. It is done via the extra mode_sel input. (2) Usage of more sophisticated interconnects architectures, for instance an A-Cells NOC.

### Fig 10 Generic knob KA-Cell

The KA-Cell, is a knob incubator cell, where the knob is described preferably at RTL level. The output of the knob is fed to an external port. The KA-Cell is used at (1) "Force" cycle to force tuning output through the knob. (2) "Scan" data from previous A-Cells via the dedicated scan-in scan-out architecture. Figure 10 shows basic internal architecture.

The generic KA-Cell shown in Figure 10, includes mainly a knob description and a communication architecture. The knob description "KD" 440 in the figure could be either RTL or a black box interface. The communication architecture used here is standard scan-chain architecture. The DEMUX 450 and the memory element 460 i.e. DFF are the main & only components of the scan-chain. Both are represented at RTL level. The DEMUX is used to route the serial input internally either to the knob i.e. KD block or to the memory element for the subsequent A-Cell.

Obviously both MA and KA cells can share one single standard interface, through which they can co-exist within the same chain/network. In the next section, for the sake of brevity, an implementation using an MA-Cell is described.

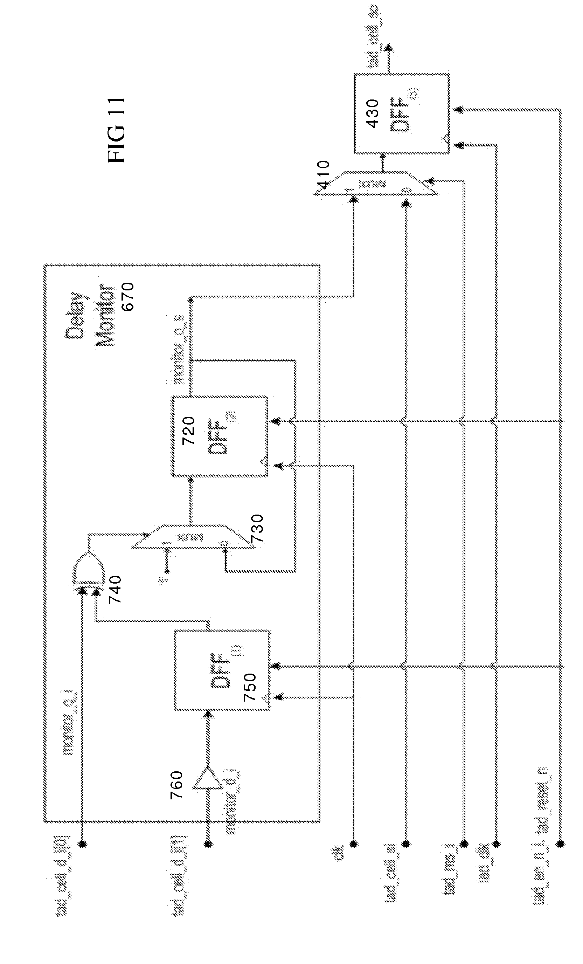

### Figure 11: Blade Example using Timing monitor in a standard MA-Cell

Given that the target is run-time fine grained digital monitoring for significant shifts due to variability/reliability in delay of a combinational logic data input, the following five steps A-E are carried out:.

A. Step 1: Preliminary work and Identification

Before running Blade a set of preliminary steps have to be carried out. The steps include MA-Cell design, setting up the requested input files in HDL/TCL, preliminary flow runs or other.

### a) MA-Cell design

The digital timing delay monitor functionality is as described in above-mentioned ref 1. Briefly stated two inputs being monitored are fed to the delay monitor 670. A first of the inputs is fed to exclusive OR gate 740. A second is fed to the same gate via a delay 760 and a DFF 750. The output of the gate is fed to the select input of a multiplexer 730. This has one input tied to logic 1 and the other has a feedback signal from the output of DFF 720, which latches the output of the multiplexer 730. The output of the delay monitor 670 is fed to a multiplexer 410 and DFF 430, for the scan circuitry as explained with reference to figure 9. Mapping the monitor architecture to the MA-Cell will result in the architecture illustrated in Figure 11. It is evident that the design shown could be easily described at RTL level in any appropriate HDL language. Notice the gating input of the DFFs.

### b) Identification

Identification is the process of answering the very basic question: where to place SKMs? Variability aware tools as are in use now provide one possible answer. Yet, in this sample monitor design a basic technique has been used. A preliminary synthesis iteration has been run. From this a graph of data latency versus the number of data paths is obtained. Assuming monitoring will be carried out for say only the top 10% critical paths, these can be selected and held in a separate TCL collection (a collection is close to the data array concept in C language) to perform various Blade operations.

### c) Running Blade setup

Once Blade set-up script starts running it starts a similar sequence to this: (1) Library set-up: concatenating standard synthetic synthesis libraries to main design libraries, then concatenating the new SKM source directories to the compiler's search path. (2)TAD file system setup: Creating directories, file system and redirecting output files to proper directories. (3)Read files: reading and elaborating SKM circuits.

### B. Step 2: Selection script

Selection is the procedure of gathering the identified elements in Step 1 in an array of elements. Usually this array of elements is called a "collection" in TCL. The selection method is therefore supported by the programming language and could be done with 1 line of code. For example, in Code 2, a collection of all the flip-flops in a sample design excluding a specific set of flip flops i.e. FF1, FF2... etc. Similar more complex collections can be made for other components with the help of TCL scripts.

### Code 2: TCL Sample selection of flip-flop elements

dc_shell>> [remove_from_collection [all_registers] {FF1 FF2 ..}]

### C. Step 3: Insertion script

Insertion is the procedure of creating and introducing multiple fine grained SKM circuits to design. Moreover proper connection of these SKM circuits to selected items in Step 2 is performed. As an example: Code 3, shows creating an MA-Cell and connecting one of its input pins to the input of a standard register i.e. creating ma_cell instances of the design ma_cell_beh, and connecting monitor_input1 to register input Q.

### Code 3: TCL Sample creating and connecting of an MA-Cell

dc_shell>> create_cell ma_cell${i} ma_cell_beh

dc_{_}shell>> connect_net [all_connected ${my_current_reg}/Q]

ma_cell$ {i} /monitor_input1

### D. Step 4: Routing script

Routing is the procedure of connecting multiple SKM circuits to each other. The communication architecture for data routing adopted in this example is the scan-chain architecture. Figure 7 shows the connectivity between subsequent A-Cells where output pin 'tad_so' of the first A-Cell is connected to 'tad_si' of the next A-Cell and so on.

### E. Step 5: Updating design constraints scipt(s)

Once all SKM circuits are inserted and connected properly, design constraints must be set for them separately. The design constraints are set iteratively for all the introduced circuits and input output connections. The constraints are appended to the original SoC constraints. Moreover, these constraints are kept always in a separate script file in order to manage speedy update or a handy integration within the overall system constraints section.

For DFT to run properly, with multiple separate TAD and DFT scan-chains, a special dedication is devoted towards the TAD scan-chains. Finally at back-end design some problems like reset synchronization, removal or addition of buffers which may affect the timing are handled with setting back-end separate constraints for the monitor circuits.

### F. Step 6: Testing and verification

After a successful insertion, a structured RTL VHDL code is generated that is equivalent to the input SoC design. The only change in such a case is the increase in interface ports due to the addition of new 5 input/output pins to the SoC. The change is carried either via a VHDL2VHDL automated script or manually. This results in direct use of the same testbenches to double check functionality before/after adding the monitor circuits at RTL. Since the SoC is elaborated already, to simulate at such a level of detail, more GTECH libraries need to be compiled iteratively in order to conduct a successful test case exercise. To monitor the behaviour of over one hundred MA-Cells with monitor circuits during simulation of run-time, a simulation test bench script is appended to debug the whole scan chain input/output. After synthesis, similar tests are compiled.

In conclusion, it is found that the design overhead is absolutely minimal (sourcing one script), the test-time overhead is negligible, and it is evident from measurements that running the TAD network of circuits is transparent to the ASIC chip hosting them. Compared to the known RTL2RTL v1.0, methods, there are a number of consequences from using the Blade example or other embodiments:
Automated selection methodology based on standard tool (e.g. DC-shell) selection functionality
Automated insertion methodology (before synthesis)
Absolutely no design requirements overhead. That's to say complex designs allowed, loop back outputs are allowed.

If a Standard (Knob and) Monitor White box interface cell called "A-cell" (no hard macros) is used, it is absolutely technology independent. Moreover, the hard macros option is still valid to be used.

Standard Monitors/Knobs can have two/four modes or even more.. (update,read, write, shutdown,..). i.e. using the "tad_ms_i" and "tad_en_i" of A-Cells.

It is portable across known synthesis tools such as Synopsys (DC-shell) or Cadence (RC-shell)

It can be less interruptive of design flow.

It can allow simulation at RTL level i.e. reuse available testbenches It does not require any mandatory flow i.e DFT

It allows multiple routing schemes with automatic generation of SKM insertion distribution structure.

Some examples can use fine grained standard knobs and monitors standardized insertion to overcome variability and reliability challenges in deep submicron technologies. An example using a crystal ball timing monitor has been described. The method and circuits can be used in a 65nm ASIC chip. The method has proved the concept for standardized monitors and can be easily extended to include different tuning circuitry. This approach enables runtime gathering information concerning the impact of aging and/or process variation at the very fine grain level of generic logic circuits. This information is useful to calibrate higher design abstraction level models at system level. Having control from a middle ware on such fine grained SKM structures, enable chips to consume less power, live longer and eventually behave as intended statistically.

Other variations can be envisaged within the scope of the claims.

## Claims

1. A method of amending a design for an integrated circuit to add fine grain tuning circuitry, the method having the steps of:
providing a design elaborated to have representations of generic logic components (520) and interconnections between the generic logic components,
automatically selecting (210) those of the generic logic components which are in critical timing paths, and
amending the design before synthesis to add (220) the fine grain tuning circuitry (500, MA, KA) automatically to the selected generic logic components in the elaborated design for use in maintaining the critical timing paths during operation of the integrated circuit.

2. The method of claim 1, having the step of automatically amending (230) the design to add connections (510) to the fine grain tuning circuitry

3. The method of claim 2, the added connections comprising a connection to an interface (540) accessible by a processor of the design.

4. The method of any preceding claim having the step of appending (240) fine grain tuning circuitry constraints to design constraints before synthesis.

5. The method of any preceding claim, the amended design being in the form of a register transfer level net list.

6. The method of claim 5, the step of automatically selecting the generic logic components comprising parsing the register transfer level netlist to select these components.

7. The method of any preceding claim and having a preliminary step of converting a behavioural description of the design into the elaborated design having representations of generic logic components and interconnections between the generic logic components.

8. The method of any preceding claim having the preliminary step of identifying (200) the critical timing paths in the design.

9. The method of any preceding claim having the step of subsequently synthesising the amended design into a technology mapped design.

10. The method of claim 9, having the steps of manufacturing the integrated circuit according to the technology mapped design by using generic cells to generate a gate level specification (60), and by carrying out a layout process to generate a transistor level specification (70, 80) from the gate level specification, and by processing a wafer (90) according to the transistor level specification.

11. The method of any preceding claim, the fine grain tuning circuitry comprising a delay monitoring circuit for monitoring the delays of signals during operation of a part of a critical timing path.

12. The method of any preceding claim, the fine grain tuning circuitry comprising circuitry for adjusting delays of signals during operation of a part of a critical timing path.

13. A computer program stored on a machine readable medium and having instructions which when executed by a processor, cause the processor to carry out the steps of any of claims 1 to 12.

14. A system for designing an integrated circuit to add fine grain tuning circuitry automatically to the design, the system having:
a store (330) for storing a design elaborated to have representations of generic logic components and interconnections between the generic logic components, and
a processor (360) arranged to access the stored design, and to receive an indication of critical timing paths, and to automatically identify which of the generic logic components are in the critical timing paths, and amend the design before synthesis, to add the fine grain tuning circuitry automatically to the identified generic logic components in the elaborated design for use in maintaining the critical timing paths during operation of the integrated circuit.

## Amended claims

### Amended claims in accordance with Rule 137(2) EPC.

**1.** A computer based method of amending a design for an integrated circuit to add fine grain tuning circuitry, the method having the steps of:
inputting the design in the form of an elaborated design, elaborated to have representations of generic logic components (520) and interconnections between the generic logic components,
automatically selecting (210) those of the generic logic components which are in critical timing paths, and
amending the design before synthesis to add (220) the fine grain tuning circuitry (500, MA, KA) automatically to the selected generic logic components in the elaborated design for use in maintaining the critical timing paths during operation of the integrated circuit.

**2.** The method of claim 1, having the step of automatically amending (230) the design to add connections (510) to the fine grain tuning circuitry

**3.** The method of claim 2, the added connections comprising a connection to an interface (540) accessible by a processor of the design.

**4.** The method of any preceding claim having the step of appending (240) fine grain tuning circuitry constraints to design constraints before synthesis.

**5.** The method of any preceding claim, the amended design being in the form of a register transfer level net list.

**6.** The method of claim 5, the step of automatically selecting the generic logic components comprising parsing the register transfer level netlist to select these components.

**7.** The method of any preceding claim and having a preliminary step of converting a behavioural description of the design into the elaborated design having representations of generic logic components and interconnections between the generic logic components.

**8.** The method of any preceding claim having the preliminary step of identifying (200) the critical timing paths in the design.

**9.** The method of any preceding claim having the step of subsequently synthesising the amended design into a technology mapped design.

**10.** The method of claim 9, having the steps of manufacturing the integrated circuit according to the technology mapped design by using generic cells to generate a gate level specification (60), and by carrying out a layout process to generate a transistor level specification (70, 80) from the gate level specification, and by processing a wafer (90) according to the transistor level specification.

**11.** The method of any preceding claim, the fine grain tuning circuitry comprising a delay monitoring circuit for monitoring the delays of signals during operation of a part of a critical timing path.

**12.** The method of any preceding claim, the fine grain tuning circuitry comprising circuitry for adjusting delays of signals during operation of a part of a critical timing path.

**13.** A computer program stored on a machine readable medium and having instructions which when executed by a processor, cause the processor to carry out the steps of any of claims 1 to 12.

**14.** A system for designing an integrated circuit to add fine grain tuning circuitry automatically to the design, the system having:
a store (330) for storing the design in the form of an elaborated design elaborated to have representations of generic logic components and interconnections between the generic logic components, and
a processor (360) arranged to access the stored design, and to receive an indication of critical timing paths, and to automatically identify which of the generic logic components are in the critical timing paths, and amend the design before synthesis, to add the fine grain tuning circuitry automatically to the identified generic logic components in the elaborated design for use in maintaining the critical timing paths during operation of the integrated circuit.
